# DEMANDE DE BREVET EUROPEEN

(11) **EP 4 016 700 A1**
(43) Date de publication de la demande: **22.06.2022**
(21) Numéro de dépôt: 21215457.9
(22) Date de dépôt: 17.12.2021
(51) Int. Cl.: H01M 10/625, B60H 1/00, B60H 1/32

(54) **SYSTÈME DE REFROIDISSEMENT ET SYSTÈME DE GESTION THERMIQUE POUR UN VÉHICULE AUTOMOBILE**

(30) Priorité: 18.12.2020 FR 2013757
(71) Demandeur: Renault s.a.s, 92100 Boulogne Billancourt (FR)
(72) Inventeur: L'HUILLIER, Jean-Marie, 92130 ISSY LES MOULINEAUX (FR)
(74) Mandataire: Renault Group

(57) **Abrégé**

Système de refroidissement (1), destiné à contrôler de façon indépendante une température d'une batterie et une température de l'habitacle d'un véhicule automobile, le système comprenant au moins un élément de refroidissement (11) d'au moins un module batterie, ledit élément de refroidissement (11) étant monté en parallèle avec un évaporateur (7) d'un circuit de climatisation (2) destiné au refroidissement de l'habitacle, le circuit de climatisation (2) comprenant en outre au moins un compresseur (3) et au moins un condenseur (5), le système comprenant une vanne de régulation de pression (13) à ouverture variable, ladite vanne de régulation de pression (13) étant disposée en aval dudit élément de refroidissement (11).

## Description

L'invention concerne un système de refroidissement destiné à contrôler de façon indépendante une température d'une batterie et une température de l'habitacle d'un véhicule automobile. L'invention porte aussi sur un procédé de gestion thermique. L'invention porte encore sur un système de gestion thermique pour un véhicule automobile comprenant un tel système de refroidissement. L'invention porte également sur un programme d'ordinateur mettant en oeuvre le procédé mentionné. L'invention porte aussi sur un support d'enregistrement sur lequel est enregistré un tel programme. L'invention porte également sur un signal d'un support de données portant un tel programme. L'invention porte enfin sur un véhicule automobile comprenant un tel système de refroidissement ou un tel système de gestion thermique.

Certains véhicules automobiles, notamment les véhicules hybrides ou les véhicules électriques, sont équipés d'une batterie.

Les batteries pour les véhicules hybrides requièrent aujourd'hui une puissance de refroidissement très élevée, pouvant atteindre 2 KW. Or, les dimensions de telles batteries sont faibles. De telles batteries offrent donc peu de surface pour leur refroidissement.

Une solution pour refroidir une batterie d'un véhicule automobile est d'utiliser des technologies basées sur la circulation d'eau ou d'air.

Des systèmes de gestion de la température de l'eau circulant dans la batterie pour son refroidissement utilisent un échangeur de chaleur de type évaporateur dit « chiller » en termes anglo-saxons.

Toutefois, cette solution présente des inconvénients. En particulier, cette solution ne permet pas de refroidir directement les modules situés à l'intérieur du pack batterie, pour des raisons de risques électriques et thermiques. Le rendement de cette solution est donc réduit. En outre, pour pouvoir faire varier la température de l'eau, la surchauffe dans l'échangeur de chaleur de type évaporateur (dit « chiller » en termes anglo-saxons) est variable et donc non contrôlée. Pour contrôler la surchauffe, on connaît des systèmes utilisant un détendeur thermostatique de type mécanique. Toutefois, de tels systèmes ne permettent pas de contrôler la température de la batterie.

Le but de l'invention est de fournir un système de refroidissement et un système et un procédé de gestion thermique remédiant aux inconvénients ci-dessus et améliorant les dispositifs et procédés connus de l'art antérieur. En particulier, l'invention permet de réaliser un système de refroidissement et un système et un procédé de gestion thermique permettant de contrôler de façon indépendante la température d'une batterie et la température de l'habitacle d'un véhicule automobile tout en conservant un fonctionnement optimal de la batterie, notamment en termes d'homogénéité de température, de durée de vie et de performances.

Selon l'invention, un système de refroidissement, destiné à contrôler de façon indépendante une température d'une batterie et une température de l'habitacle d'un véhicule automobile, comprend au moins un élément de refroidissement d'au moins un module batterie, ledit élément de refroidissement étant monté en parallèle avec un évaporateur d'un circuit de climatisation destiné au refroidissement de l'habitacle, le circuit de climatisation comprenant en outre au moins un compresseur et au moins un condenseur, le système comprenant une vanne de régulation de pression à ouverture variable, ladite vanne de régulation de pression étant disposée en aval dudit élément de refroidissement.

Le système peut comprendre un capteur de température disposé sur l'élément de refroidissement.

L'élément de refroidissement peut comprendre au moins une plaque ou au moins un tube en contact direct avec ledit au moins un module batterie, un fluide réfrigérant étant destiné à circuler dans ladite au moins une plaque ou dans ledit au moins un tube.

La vanne de régulation de pression peut être de type à détente électronique, par exemple une valve à bille ou une vanne à pointeaux.

Le système peut comprendre un premier détendeur thermostatique disposé en amont de l'élément de refroidissement et/ou un deuxième détendeur thermostatique disposé en amont de l'évaporateur.

Le système peut comprendre une vanne de coupure en amont de l'évaporateur, notamment en amont du deuxième détendeur thermostatique.

L'invention concerne aussi un procédé de gestion thermique pour un véhicule automobile comprenant un système de refroidissement défini précédemment, utilisant le contrôle de la température par le débit de réfrigérant contrôlé par le compresseur du circuit de climatisation, notamment par le régime de compression du compresseur, et utilisant le contrôle de la température par le taux d'ouverture de ladite vanne de régulation de pression.

L'invention concerne également un système de gestion thermique pour un véhicule automobile comprenant un système de refroidissement défini précédemment, le système comprenant des éléments matériels et/ou logiciels mettant en œuvre le procédé défini précédemment, notamment des éléments matériels et/ou logiciels conçus pour mettre en œuvre le procédé défini précédemment, et/ou le système comprenant des moyens de mettre en œuvre le procédé défini précédemment.

Le système de gestion thermique peut comprendre :
- un moyen pour réguler la température de l'évaporateur par le débit de réfrigérant, notamment par le régime de compression du compresseur ; et/ou
- un moyen pour réguler la température de la batterie par le taux d'ouverture de ladite vanne de régulation de pression ; et/ou
- un moyen pour réguler la température de la batterie par le débit de réfrigérant, notamment par le régime de compression du compresseur ; et/ou
- un moyen pour réguler la température de l'évaporateur par le taux d'ouverture de ladite vanne de régulation de pression.

L'invention concerne aussi un produit programme d'ordinateur comprenant des instructions de code de programme enregistrées sur un support lisible par ordinateur pour mettre en œuvre le procédé défini précédemment lorsque ledit programme fonctionne sur un ordinateur ou un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en œuvre le procédé défini précédemment.

L'invention concerne également un support d'enregistrement de données, lisible par un ordinateur, sur lequel est enregistré un programme d'ordinateur comprenant des instructions de code de programme de mise en œuvre du procédé défini précédemment ou un support d'enregistrement lisible par ordinateur comprenant des instructions qui, lorsqu'elles sont exécutées par un ordinateur, conduisent celui-ci à mettre en œuvre le procédé défini précédemment.

L'invention concerne aussi un signal d'un support de données, portant le produit programme d'ordinateur défini précédemment.

L'invention concerne enfin un véhicule automobile comprenant une batterie et comprenant un système de refroidissement défini précédemment ou un système de gestion thermique défini précédemment.

Les dessins annexés représentent, à titre d'exemple, un mode de réalisation d'un système de refroidissement selon l'invention et un mode de réalisation d'un système de gestion thermique selon l'invention.

[Fig. 1] La figure 1 représente un mode de réalisation d'un système de refroidissement.

[Fig. 2] La figure 2 représente un mode de réalisation d'une logique de commande d'un système de gestion thermique.

L'invention propose d'utiliser une technologie à plaques de réfrigérant de climatisation pour refroidir une batterie d'un véhicule automobile.

Un élément de refroidissement est disposé en parallèle avec un évaporateur d'un circuit de climatisation servant à la climatisation de l'habitacle du véhicule. L'élément de refroidissement comprend par exemple au moins une plaque ou au moins un tube plat dans lequel un fluide réfrigérant est destiné à circuler.

L'élément de refroidissement est en contact direct avec le ou les modules batterie situés à l'intérieur du pack batterie, ce qui permet de refroidir directement les modules batterie. Il en résulte un rendement maximal.

Toutefois, l'utilisation de cette technologie requiert de respecter deux contraintes.

Une première contrainte est d'assurer une température homogène sur tout l'élément de refroidissement. L'écart maximal admissible entre le point le plus froid et le point le plus chaud de l'élément de refroidissement est par exemple de l'ordre de 5°C. Comme l'élément de refroidissement fonctionne en diphasique, un contrôle de la surchauffe de l'évaporation du réfrigérant dans l'élément de refroidissement est requis, afin que cette surchauffe ne dépasse pas 5°C.

Par ailleurs, pour des raisons de coût et pour des raisons liées à la mise en boîtier (« packaging » en termes anglo-saxons), une telle technologie utilise de préférence un élément de refroidissement disposé sur une seule face des modules batterie, comprenant par exemple une seule plaque de refroidissement.

Une deuxième contrainte est alors d'assurer que la différence de température entre le point le plus froid d'un module batterie, à un emplacement de la face du module batterie en contact avec l'élément de refroidissement, et le point le plus chaud du module batterie, par exemple à un emplacement de la face du module batterie opposée à la face en contact avec l'élément de refroidissement, ne dépasse pas 10°C.

Une telle technologie requiert donc, en plus du contrôle de la surchauffe du réfrigérant, un contrôle de la température de l'élément de refroidissement.

Pour contrôler la surchauffe du réfrigérant dans les systèmes de climatisation, une solution est d'utiliser un détendeur thermostatique (TXV, acronyme d'origine anglo-saxonne pour « Thermal expansion valve » ou « Thermostatic expansion valve »). Un tel détendeur thermostatique permet d'adapter de façon mécanique l'ouverture de la détente en amont de l'élément de refroidissement de façon à garantir une surchauffe fixe en sortie de l'élément de refroidissement. Toutefois, l'utilisation d'un tel détendeur thermostatique ne permet pas de contrôler la température de l'élément de refroidissement.

L'invention propose un système de refroidissement permettant de contrôler la surchauffe du réfrigérant et de contrôler la température de l'élément de refroidissement.

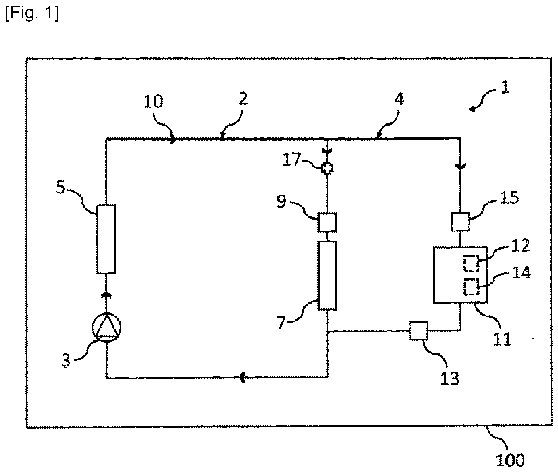

Un exemple d'un véhicule automobile 100 équipé d'un mode de réalisation d'un système de refroidissement 1 est décrit ci-après en référence à la figure 1.

Le véhicule automobile 100 peut être un véhicule automobile électrique ou hybride. Le véhicule automobile 100 comprend une batterie.

Le véhicule automobile 100 comprend un circuit de climatisation 2, destiné au refroidissement de l'habitacle. Un fluide réfrigérant est destiné à circuler dans le circuit de climatisation 2.

Le sens d'écoulement ou de circulation du fluide réfrigérant dans le système de refroidissement 1 est représenté par des flèches 10 sur la figure 1.

Les termes « amont » ou « entrée », et « aval » ou « sortie », sont définis par rapport au sens d'écoulement du fluide réfrigérant.

Le circuit de climatisation 2 peut comprendre au moins un compresseur 3, au moins un condenseur 5 et au moins un évaporateur 7.

Le compresseur 3 est disposé en amont du condenseur 5 lui-même disposé en amont de l'évaporateur 7.

L'évaporateur 7 est destiné à contrôler une température de l'habitacle du véhicule automobile.

De préférence, le compresseur 3 peut être un compresseur à commande électrique.

De préférence, l'évaporateur 7 peut être un évaporateur à air.

L'invention propose, pour contrôler la température de la batterie du véhicule automobile, d'utiliser le compresseur 3 du circuit de climatisation 2. Avantageusement, le système de refroidissement 1 comprend un seul compresseur 3 permettant d'assurer à la fois le refroidissement de la batterie et le refroidissement de l'habitacle du véhicule automobile. Il en résulte un coût réduit d'un tel système de refroidissement.

L'invention propose un système de refroidissement permettant de contrôler, de façon indépendante, une température d'une batterie et une température de l'habitacle d'un véhicule automobile.

Le système de refroidissement 1 comprend un élément de refroidissement 11 d'au moins un module batterie d'un pack batterie.

L'élément de refroidissement 11 est destiné à contrôler une température de la batterie.

L'élément de refroidissement 11 est monté en parallèle avec l'évaporateur 7 du circuit de climatisation 2 destiné au refroidissement de l'habitacle.

De préférence, l'élément de refroidissement 11 est en contact direct avec ledit au moins un module batterie.

L'élément de refroidissement 11 peut comprendre au moins une plaque 14 ou au moins un tube plat en contact direct avec ledit au moins un module batterie, un fluide réfrigérant étant destiné à circuler dans ladite au moins une plaque ou dans ledit au moins un tube. L'au moins une plaque 14 peut par exemple comprendre des canaux de refroidissement dans lesquels un fluide réfrigérant est destiné à circuler.

Avantageusement, l'élément de refroidissement 11 peut être disposé sur une seule face du ou des modules batterie. L'élément de refroidissement 11 est par exemple une plaque 14 disposée sur une face du ou des modules batterie.

Avantageusement, le système de refroidissement 1 peut comprendre un capteur de température 12 disposé sur l'élément de refroidissement 11. Le capteur de température 12 est destiné à mesurer la température de surface de l'élément de refroidissement 11.

Le système de refroidissement 1 comprend une vanne de régulation de pression 13. Avantageusement, la vanne de régulation de pression 13 est à ouverture variable. La vanne de régulation de pression 13 est disposée en aval de l'élément de refroidissement 11, sur la boucle 4 comprenant l'élément de refroidissement 11 en parallèle avec l'évaporateur 7.

La vanne de régulation de pression 13 est destinée à assurer une régulation de la température de l'élément de refroidissement 11.

La vanne de régulation de pression 13 permet d'assurer une perte de charge variable entre la basse pression en sortie de l'évaporateur 7 et la basse pression en sortie de l'élément de refroidissement 11. Lors du changement de phase diphasique du fluide réfrigérant, la température d'évaporation est constante et fonction de la pression. Une modification de pression, par exemple par modification de la section d'ouverture de la vanne de régulation de pression 13, entraîne une modification de la température de régulation. La différence de pression en sortie de l'évaporateur 7 et en sortie de l'élément de refroidissement 11 permet d'assurer une différence de température. La vanne de régulation de pression 13 permet donc de réguler la température de l'élément de refroidissement 11, ce qui permet de réguler la température de la batterie.

La vanne de régulation de pression 13 peut être de type à détente électronique ou un système détendeur électronique de type EXV, acronyme d'origine anglo-saxonne pour « Electronic expansion valve ».

La vanne de régulation de pression 13 est par exemple une valve à bille ou une vanne à pointeaux.

Avantageusement, le système de refroidissement 1 peut comprendre un premier détendeur thermostatique 15 disposé en amont de l'élément de refroidissement 11, sur la boucle 4 comprenant l'élément de refroidissement 11 en parallèle avec l'évaporateur 7. Le premier détendeur thermostatique 15 est destiné à contrôler la surchauffe en sortie de l'élément de refroidissement 11.

Avantageusement, le système de refroidissement 1 peut comprendre un deuxième détendeur thermostatique 9 disposé en amont de l'évaporateur 7, sur la portion du circuit de climatisation 2 en parallèle avec l'élément de refroidissement 11. Le deuxième détendeur thermostatique 9 est destiné à contrôler la surchauffe en sortie de l'évaporateur 7.

Le premier détendeur thermostatique 15 et le deuxième détendeur thermostatique 9 sont par exemple du type habituellement utilisés pour contrôler la surchauffe d'un élément de refroidissement ou refroidisseur.

Le premier détendeur thermostatique 15 et le deuxième détendeur thermostatique 9 permettent en outre de réguler le débit de réfrigérant pour assurer en sortie de l'évaporateur 7 un fluide très gazeux pour le compresseur 3.

Avantageusement, une vanne ON/OFF de coupure 17 est disposée en amont de l'évaporateur 7, notamment en amont du deuxième détendeur thermostatique 9, sur la portion du circuit de climatisation 2 en parallèle avec l'élément de refroidissement 11.

La vanne de coupure 17 permet d'assurer tous les cas d'usages pouvant être rencontrés dans l'utilisation du véhicule. Dans le cas où seul le refroidissement de la batterie est souhaité, la vanne de coupure 17 est mise à l'état OFF.

Un avantage d'un système de refroidissement du type de celui décrit ci-dessus réside dans le fait qu'il permet d'assurer une température homogène sur tout l'élément de refroidissement 11 et de contrôler la température de l'élément de refroidissement 11.

Un avantage d'un système de refroidissement du type de celui décrit ci-dessus réside dans le fait qu'il permet une gestion de façon indépendante des températures de la batterie et de l'habitacle tout en conservant un fonctionnement optimal de la batterie, notamment en terme d'homogénéité de température. Il en résulte une durée de vie et une performance accrues de la batterie.

Un avantage d'un système de refroidissement du type de celui décrit ci-dessus réside dans le fait qu'il permet de contrôler la température de la batterie tout en garantissant un confort optimal pour un utilisateur du véhicule, même lorsque la climatisation est activée pour les besoins de refroidissement de l'habitacle. Un tel système de refroidissement permet également de contrôler la température de la batterie en fonction du type de conduite de l'utilisateur du véhicule.

L'invention propose un procédé de gestion thermique pour un véhicule automobile comprenant un système de refroidissement du type de celui décrit ci-dessus. Le procédé de gestion thermique utilise le contrôle de la température par le débit de réfrigérant contrôlé par le compresseur 3 du circuit de climatisation 2, notamment le contrôle de la température par le régime de rotation du compresseur électrique 3, et utilise le contrôle de la température par le taux d'ouverture de la vanne de régulation de pression 13.

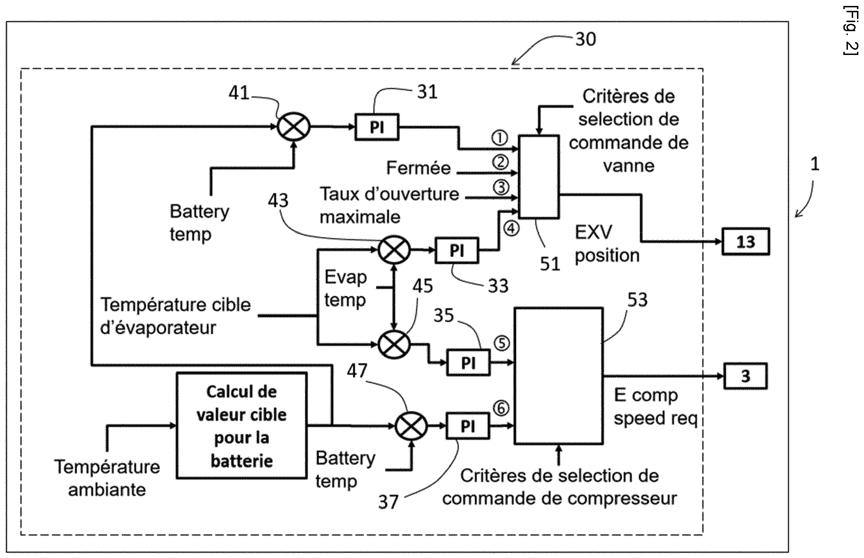

Un système de gestion thermique 30, pour un véhicule automobile comprenant un système de refroidissement du type de celui décrit en relation avec la figure 1, est décrit ci-après en référence à la figure 2. Le système de gestion thermique 30 comprend des éléments 31, 33, 35, 37, 41, 43, 45, 47, 51, 53 matériels et/ou logiciels mettant en œuvre ou régissant un procédé de gestion thermique. Ces différents éléments peuvent comprendre des modules logiciels.

Par exemple, les éléments matériels et/ou logiciels peuvent comprendre tout ou partie des éléments suivants :
- un calculateur ;
- au moins un comparateur ;
- au moins un module de sélection.

Le système de gestion thermique 30 peut comprendre :
- un moyen 35 pour réguler la température de l'évaporateur 7 par le débit de réfrigérant, notamment par le régime de compression du compresseur 3 ; et/ou
- un moyen 31 pour réguler la température de la batterie par le taux d'ouverture de la vanne de régulation de pression 13 ; et/ou
- un moyen 37 pour réguler la température de la batterie par le débit de réfrigérant, notamment par le régime de compression du compresseur 3 ; et/ou
- un moyen 33 pour réguler la température de l'évaporateur 7 par le taux d'ouverture de la vanne de régulation de pression 13.

Les moyens ou systèmes ou modules de régulation ou régulateurs 31, 33, 35, 37 sont par exemple des proportionnelles intégrales (PI ou PID).

Les moyens de régulation 31, 33, 35, 37 sont par exemple intégrés dans un (ou des) calculateur(s), par exemple dans un calculateur utilisé pour le contrôle de la climatisation du véhicule.

On appelle « E comp speed req » la vitesse de compression du compresseur 3, correspondant par exemple à la vitesse de rotation du moteur électrique du compresseur.

On appelle « EXV position » la position ou le taux d'ouverture de la vanne de régulation de pression 13 à ouverture variable.

Une première valeur, appelée « Evap temp », correspond à la température (mesurée) de l'évaporateur 7, ou température de confort thermique.

Une deuxième valeur, appelée « Battery temp », correspond à la température (mesurée) de la batterie.

Le système de gestion thermique 30 peut comprendre en outre au moins un comparateur. L'au moins un comparateur est destiné à comparer une valeur mesurée avec une valeur cible (ou de consigne).

Le système de gestion thermique 30 comprend par exemple un premier comparateur 41 et un deuxième comparateur 47 reliés respectivement à l'entrée du moyen de régulation 31 et à l'entrée du moyen de régulation 37. Le premier comparateur 41 et le deuxième comparateur 47 sont destinés à comparer une valeur mesurée de la température de la batterie avec une valeur cible (ou de consigne) de la température de la batterie.

La valeur mesurée de la température de la batterie est par exemple obtenue grâce à la température mesurée par le capteur de température disposé sur l'élément de refroidissement 11.

Le système de gestion thermique 30 comprend par exemple un troisième comparateur 43 et un quatrième comparateur 45 reliés respectivement à l'entrée du moyen de régulation 33 et à l'entrée du moyen de régulation 35. Le troisième comparateur 43 et le quatrième comparateur 45 sont destinés à comparer une valeur mesurée de la température de l'évaporateur avec une valeur cible (ou de consigne) de la température de l'évaporateur.

La valeur mesurée de la température de l'évaporateur correspond par exemple à la température de l'air qui sort de l'évaporateur.

Le système de gestion thermique 30 peut comprendre en outre au moins un module de sélection ou d'aiguillage. L'au moins un module de sélection est destiné à sélectionner les différents modes de fonctionnement du système de gestion thermique 30.

Le système de gestion thermique 30 comprend par exemple un premier module de sélection 51 et un deuxième module de sélection 53.

Le système de gestion thermique 30 est apte à fonctionner selon huit modes de fonctionnement décrits ci-dessous.

Le premier module de sélection 51 est destiné à sélectionner un mode de fonctionnement parmi les modes de fonctionnement 1, 2, 3 et 4.

Le deuxième module de sélection 53 est destiné à sélectionner un mode de fonctionnement parmi les modes de fonctionnement 5 et 6.

Un premier mode de fonctionnement correspond à un mode OFF. Aucun refroidissement n'est demandé. Ni la batterie ni l'habitacle ne requièrent de refroidissement.

Un deuxième mode de fonctionnement correspond au cas où seul un refroidissement de l'habitacle est requis. La vanne de régulation de pression 13 en sortie de l'élément de refroidissement 11 de la batterie est en position fermée. Le réfrigérant ne circule pas dans l'élément de refroidissement 11 de la batterie.

Dans le deuxième mode de fonctionnement, la température de l'habitacle est contrôlée par le module de régulation 35 qui ajuste la vitesse du compresseur 3 pour obtenir la température d'air en sortie de l'évaporateur 7 adaptée au confort de l'utilisateur.

Un troisième mode de fonctionnement correspond au cas où seul un refroidissement de la batterie est requis. La vanne de coupure 17 en entrée de la boucle de l'évaporateur 7 est fermée, et le taux d'ouverture de la vanne de régulation de pression 13 est maximal.

Dans le troisième mode de fonctionnement, la température de la batterie est contrôlée par le module de régulation 37 qui ajuste la vitesse du compresseur 3 pour obtenir la température de surface de l'élément de refroidissement 11 correspondant au besoin de refroidissement de la batterie.

Un quatrième mode de fonctionnement correspond au cas où un refroidissement de l'habitacle et un refroidissement de la batterie sont requis.

Dans le quatrième mode de fonctionnement, on utilise le module de régulation 35 de la vitesse de rotation du compresseur pour ajuster la température de l'habitacle et on utilise le module de régulation 31 qui ajuste le taux d'ouverture de la vanne de régulation de pression 13 pour obtenir la température de l'élément de refroidissement 11 de la batterie souhaitée.

Un cinquième mode de fonctionnement correspond au cas où le besoin de refroidissement de l'habitacle est très élevé. On choisit alors de ne pas refroidir la batterie. Ce cinquième mode de fonctionnement est similaire au deuxième mode de fonctionnement. La vanne de régulation de pression 13 en sortie de l'élément de refroidissement 11 de la batterie est en position fermée. Le réfrigérant ne circule pas dans l'élément de refroidissement 11 de la batterie.

Dans le cinquième mode de fonctionnement, on utilise le module de régulation 35 pour contrôler la température de l'air qui sort de l'évaporateur 7 en agissant sur le régime de compression du compresseur 3.

Un sixième mode de fonctionnement correspond au cas où le compresseur 3 est à son régime maximum ou au cas où le régime du compresseur 3 est limité, notamment pour des raisons acoustiques ou pour d'autres raisons.

Dans le sixième mode de fonctionnement, on privilégie l'obtention de la température souhaitée pour l'évaporateur 7 permettant le refroidissement de l'habitacle, et on redistribue le reste à la batterie. Pour cela, on utilise le module de régulation 33 qui contrôle l'ouverture de la vanne de régulation de pression 13 en fonction de la température en sortie de l'évaporateur 7.

Un septième mode de fonctionnement correspond au cas où la batterie atteint un premier seuil de température haut.

Dans le septième mode de fonctionnement, on ouvre au maximum la vanne de régulation de pression 13.

Un huitième mode de fonctionnement correspond au cas où la batterie atteint un deuxième seuil de température haut.

Dans le huitième mode de fonctionnement, on coupe le circuit de climatisation de façon à éviter un risque de détérioration de la batterie.

## Revendications

1. Système de refroidissement (1), destiné à contrôler de façon indépendante une température d'une batterie et une température de l'habitacle d'un véhicule automobile, le système comprenant au moins un élément de refroidissement (11) d'au moins un module batterie, ledit élément de refroidissement (11) étant monté en parallèle avec un évaporateur (7) d'un circuit de climatisation (2) destiné au refroidissement de l'habitacle, le circuit de climatisation (2) comprenant en outre au moins un compresseur (3) et au moins un condenseur (5), le système comprenant une vanne de régulation de pression (13) à ouverture variable, ladite vanne de régulation de pression (13) étant disposée en aval dudit élément de refroidissement (11).

2. Système selon la revendication 1, comprenant un capteur de température (12) disposé sur l'élément de refroidissement (11).

3. Système selon la revendication 1 ou 2, dans lequel l'élément de refroidissement (11) comprend au moins une plaque (14) ou au moins un tube en contact direct avec ledit au moins un module batterie, un fluide réfrigérant étant destiné à circuler dans ladite au moins une plaque ou dans ledit au moins un tube.

4. Système selon l'une quelconque des revendications précédentes, dans lequel la vanne de régulation de pression (13) est de type à détente électronique, par exemple une valve à bille ou une vanne à pointeaux.

5. Système selon l'une quelconque des revendications précédentes, comprenant un premier détendeur thermostatique (15) disposé en amont de l'élément de refroidissement (11) et/ou un deuxième détendeur thermostatique (9) disposé en amont de l'évaporateur (7).

6. Système selon l'une quelconque des revendications précédentes, comprenant une vanne de coupure (17) en amont de l'évaporateur (7), notamment en amont du deuxième détendeur thermostatique (9).

7. Procédé de gestion thermique pour un véhicule automobile comprenant un système de refroidissement (1) selon l'une quelconque des revendications précédentes, utilisant le contrôle de la température par le débit de réfrigérant contrôlé par le compresseur (3) du circuit de climatisation (2), notamment par le régime de compression du compresseur, et utilisant le contrôle de la température par le taux d'ouverture de ladite vanne de régulation de pression (13).

8. Système de gestion thermique (30) pour un véhicule automobile comprenant un système de refroidissement (1) selon l'une quelconque des revendications 1 à 6, le système comprenant des éléments (31, 33, 35, 37, 41, 43, 45, 47, 51, 53) matériels et/ou logiciels mettant en œuvre le procédé selon la revendication 7, notamment des éléments matériels (31, 33, 35, 37, 41, 43, 45, 47, 51, 53) et/ou logiciels conçus pour mettre en œuvre le procédé selon la revendication 7.

9. Système selon la revendication précédente, comprenant :
- un moyen (35) pour réguler la température de l'évaporateur (7) par le débit de réfrigérant, notamment par le régime de compression du compresseur (3) ; et/ou
- un moyen (31) pour réguler la température de la batterie par le taux d'ouverture de ladite vanne de régulation de pression (13) ; et/ou
- un moyen (37) pour réguler la température de la batterie par le débit de réfrigérant, notamment par le régime de compression du compresseur (3) ; et/ou
- un moyen (33) pour réguler la température de l'évaporateur (7) par le taux d'ouverture de ladite vanne de régulation de pression (13).

10. Produit programme d'ordinateur comprenant des instructions de code de programme enregistrées sur un support lisible par ordinateur pour mettre en œuvre le procédé selon la revendication 7 lorsque ledit programme fonctionne sur un ordinateur.

11. Support d'enregistrement de données, lisible par un ordinateur, sur lequel est enregistré un programme d'ordinateur comprenant des instructions de code de programme de mise en œuvre du procédé selon la revendication 7.

12. Signal d'un support de données, portant le produit programme d'ordinateur selon la revendication 10.

13. Véhicule automobile (100) comprenant une batterie et comprenant un système de refroidissement (1) selon l'une quelconque des revendications 1 à 6 ou un système de gestion thermique (30) selon la revendication 8 ou 9.
